# EUROPEAN PATENT APPLICATION

(11) **EP 3 522 278 A1**
(43) Date of publication of application: **07.08.2019**
(21) Application number: 16917612.0
(22) Date of filing: 29.09.2016
(51) Int. Cl.: H01M 8/16, H01M 4/96

(54) **MICROBIAL FUEL CELL AND WASTE LIQUID TREATMENT SYSTEM**

(71) Applicant: Panasonic Corporation, Kadoma-shi, Osaka 571-8501 (JP)
(72) Inventor: YOSHIKAWA, Naoki, Osaka 540-6207 (JP); KITADE, Yuuki, Osaka 540-6207 (JP)
(74) Representative: Müller-Boré & Partner Patentanwälte PartG mbB
(86) International application number: PCT/JP2016/004395
(87) International publication number: WO 2018/061058

(57) **Abstract**

A microbial fuel cell (1, 1A) contains a negative electrode (10) including a sheet-like first carbon material (11) including a graphene sheet, the negative electrode supporting microorganisms, and a positive electrode (20) opposed to the negative electrode. The negative electrode has an arithmetical mean roughness Ra on the surface thereof set in a range of 4.0 µm to 10000 µm. A waste liquid treatment system includes the microbial fuel cell, wherein the positive electrode is arranged in contact with gas containing oxygen. The microbial fuel cell can be deformed into a shape so as to have high resistance to water pressure. The microbial fuel cell can also increase in the amount of microorganisms supported on the negative electrode due to the high arithmetical mean roughness Ra, so as to enhance output power of the microbial fuel cell.

## Description

### TECHNICAL FIELD

The present invention relates to a microbial fuel cell and a waste liquid treatment system. More particularly, the present invention relates to a microbial fuel cell and a waste liquid treatment system capable of purifying waste liquid and generating electrical energy.

### BACKGROUND ART

Microbial fuel cells that generate electricity using biomass are in increasing demand as sustainable energy. The microbial fuel cells are superior systems capable of converting organic matter into electrical energy by use of metabolism of microorganisms, so as to collect energy while treating the organic matter. Such microbial fuel cells are still required to be improved because the amount of electricity generated by microorganisms is quite small, and current density to be output is thus low.

Patent Literature 1 discloses an electrode for such a microbial fuel cell. The electrode for a microbial fuel cell disclosed in Patent Literature 1 includes an electrode base including carbon, and carbon nanowires formed across the whole or a part of the surface of the electrode base. Patent Literature 1 discloses that the electrode base has a fibrous structure or a porous structure having gaps and/or pores, and the length and/or the width of the gaps and the diameter of the pores are each set to a predetermined value. Patent Literature 1 discloses that the electrode base may have stiffness so as to keep the shape as an electrode. Patent Literature 1 further discloses that the electrode base, which may be composed of powdered microparticles such as carbon black, is required to be held on a surface of a supporting body formed of a different substance so as to keep the shape as an electrode.

### CITATION LIST

### PATENT LITERATURE

Patent Literature 1: Japanese Patent No. 5494996

### SUMMARY OF INVENTION

The electrode base disclosed in Patent Literature 1 has high stiffness and therefore has low flexibility. The electrode is thus not easy to bend into a particular shape. The electrode base formed such that the powdered microparticles are held on the supporting body, may decrease in output power of the microbial fuel cell, since contact resistance between the microparticles and the supporting body increases.

The present invention has been made in view of the above-described conventional problems. An object of the present invention is to provide a microbial fuel cell having high flexibility and capable of keeping output power high, and a waste liquid treatment system.

In order to solve the above problems, a microbial fuel cell according to a first aspect of the present invention includes a negative electrode including a sheet-like first carbon material including a graphene sheet, the negative electrode supporting microorganisms, and a positive electrode opposed to the negative electrode. The negative electrode has an arithmetical mean roughness Ra on a surface of the negative electrode set in a range of 4.0 µm to 10000 µm.

A waste liquid treatment system according to a second aspect of the present invention includes the microbial fuel cell according to the first aspect, wherein the positive electrode is arranged in contact with gas containing oxygen.

### BRIEF DESCRIPTION OF DRAWINGS

Fig. 1 is a schematic perspective view showing an example of a microbial fuel cell according to an embodiment of the present invention.
Fig. 2 is a cross-sectional view taken along line A-A in Fig. 1.
Fig. 3 is a schematic plan view illustrating the microbial fuel cell according to the embodiment of the present invention.
Fig. 4 is an exploded perspective view showing a fuel cell unit in the microbial fuel cell.
Fig. 5(a) is a schematic cross-sectional view showing an example of a negative electrode according to the embodiment of the present invention, and Fig. 5(b) is an enlarged schematic view showing the region indicated by the symbol B in Fig. 5(a).
Fig. 6 is a schematic perspective view showing another example of the negative electrode according to the embodiment of the present invention.
Fig. 7 is a schematic cross-sectional view showing an example of a positive electrode according to the embodiment of the present invention.
Fig. 8 is a schematic perspective view showing another example of the microbial fuel cell according to the embodiment of the present invention.
Fig. 9 is a schematic plan view of the other example of the microbial fuel cell according to the embodiment of the present invention.
Fig. 10 is a graph showing a relationship between operating days and steady-state output values in a microbial fuel cell of each of Example and Comparative Example.

### DESCRIPTION OF EMBODIMENTS

A microbial fuel cell and a waste liquid treatment system according to the present embodiment will be described in detail below. The dimensions in the drawings may be exaggerated for illustration purposes, and are not necessarily drawn to scale.

### [Microbial fuel cell]

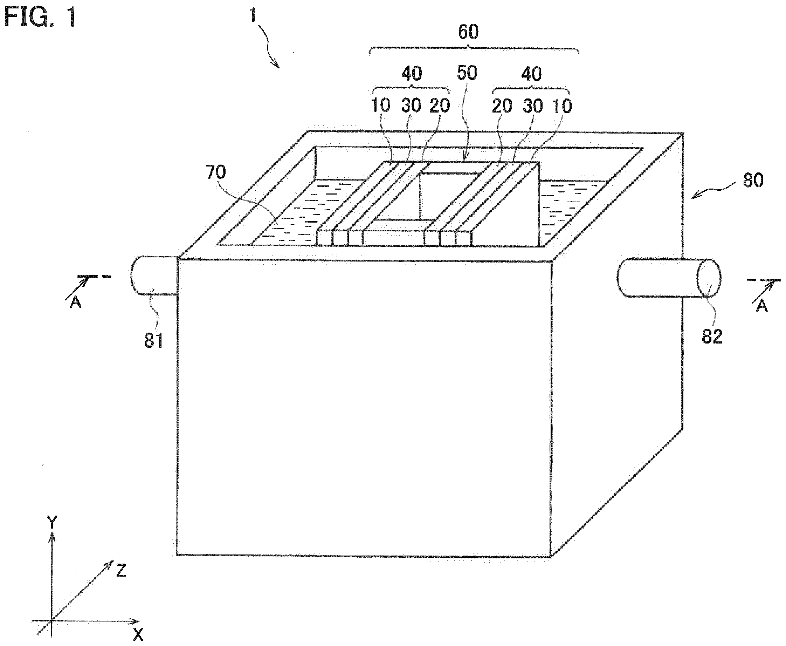

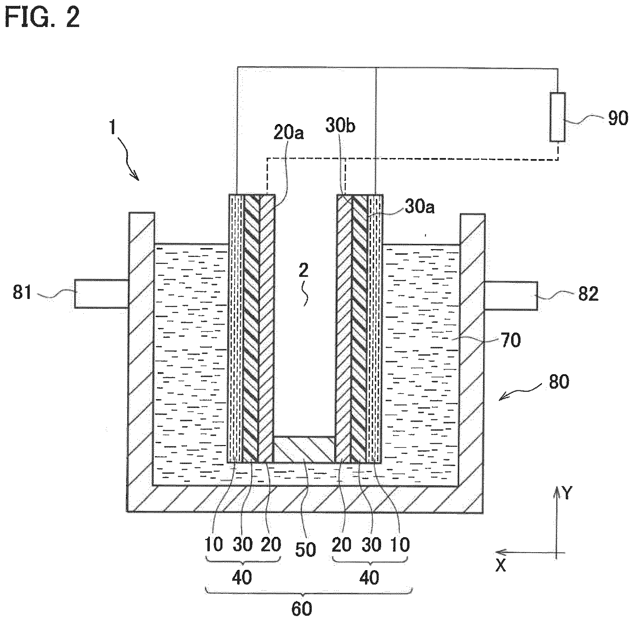

As shown in Fig. 1 to Fig. 3, the microbial fuel cell 1 according to the present embodiment includes a plurality of membrane electrode assemblies 40 each including a negative electrode 10, a positive electrode 20, and an ion transfer layer 30. The microbial fuel cell 1 has a structure, as shown in Fig. 2, in which the negative electrode 10 is in contact with one surface 30a of the ion transfer layer 30, and the positive electrode 20 is in contact with the other surface 30b of the ion transfer layer 30 on the opposite side of the surface 30a.

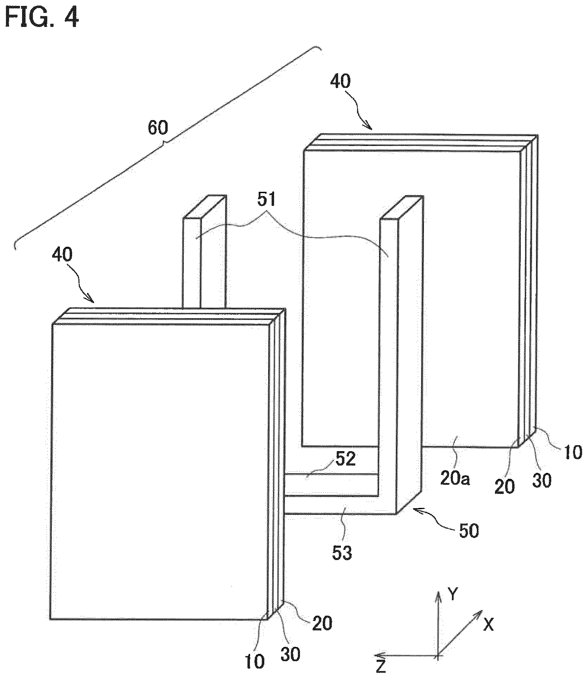

As shown in Fig. 4, the two membrane electrode assemblies 40 are stacked via a cassette substrate 50 such that the respective positive electrodes 20 are opposed to each other. The cassette substrate 50 is a U-shaped frame member placed along the circumference of the surface 20a of the positive electrode 20 and open on the upper side. In particular, the cassette substrate 50 is a frame member in which two first pillar-shaped members 51 are connected at bottom ends to a second pillar-shaped member 52. Each side surface 53 of the cassette substrate 50 is joined to the circumference of the surface 20a of the positive electrode 20, so as to prevent a liquid 70 to be treated from leaking into the inside of the cassette substrate 50 from the circumference of the surface 20a of the positive electrode 20.

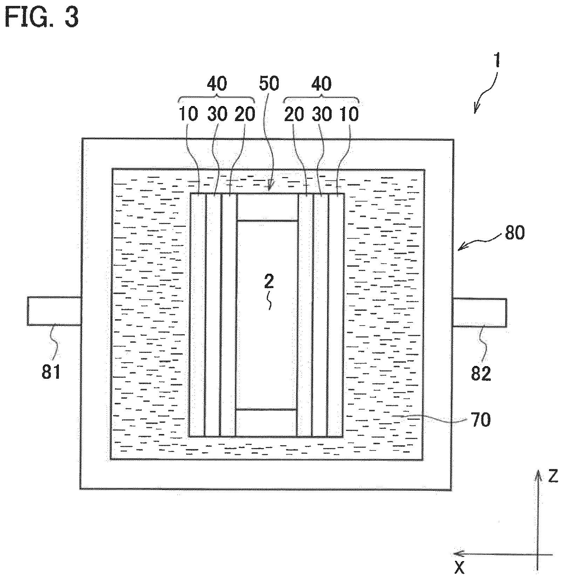

As shown in Fig. 2 and Fig. 3, a fuel cell unit 60 assembled from the two membrane electrode assemblies 40 and the cassette substrate 50 is placed in a waste liquid tank 80 such that a gas phase 2 communicating with the air is provided inside the fuel cell unit 60. The liquid 70 to be treated is held in the waste liquid tank 80, and the negative electrode 10, the positive electrode 20, and the ion transfer layer 30 are impregnated with the liquid 70.

As described below, the positive electrode 20 includes a water-repellent layer 21 having water repellency. The inside of the cassette substrate 50 is separated from the liquid 70 to be treated held in the waste liquid tank 80, so that the inner space defined by the two membrane electrode assemblies 40 and the cassette substrate 50 serves as the gas phase 2. As shown in Fig. 2, the negative electrode 10 and the positive electrode 20 are each electrically connected to an external circuit 90.

### (Negative electrode)

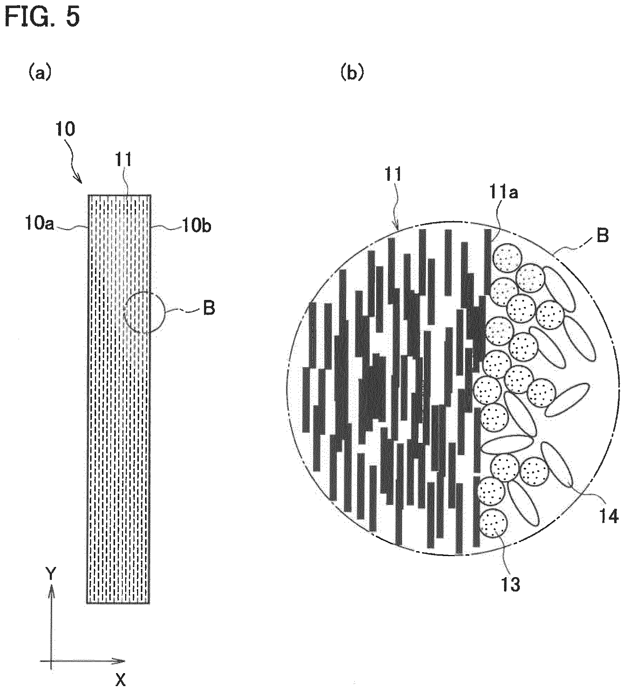

The negative electrode 10 according to the present embodiment includes a sheet-like first carbon material 11 including a graphene sheet, as shown in Fig. 5(a). The graphene sheet is obtained such that graphite is processed into a sheet. The graphene sheet has high corrosion resistance and substantially the same electrical resistivity as a metal material, so as to achieve both durability and electrical conductivity.

The graphene sheet is obtained as follows, for example. First, natural graphite is subjected to chemical treatment with acid so as to provide inserts between graphene layers of the graphite. Subsequently, the graphene layers provided with the inserts are rapidly heated at a high temperature, so as to obtain expanded graphite in which gaps between the graphene layers are expanded by gas pressure due to thermal decomposition of the inserts between the graphene layers. Thereafter, the expanded graphite is pressed and rolled, so as to obtain the graphene sheet. When the graphene sheet thus obtained is used for the first carbon material 11, the graphene layers in the graphite are arranged in the direction Y perpendicular to the stacking direction X, as shown in Fig. 5(a). Accordingly, electrical conductivity between the first carbon material 11 and the external circuit 90 is increased, so as to further improve the efficiency of the cell reaction. The graphene sheet has flexibility due to gaps provided between the graphene layers.

The negative electrode 10 holds anaerobic microorganisms thereon, and hydrogen ions and electrons are produced from at least one of organic matter or a nitrogen-containing compound contained in the liquid 70 to be treated due to the catalysis of the microorganisms. In particular, the negative electrode 10 has one surface 10a and the other surface 10b on the opposite side of the surface 10a, wherein the surface 10a is opposed to the positive electrode 20 with the ion transfer layer 30 interposed therebetween, and the other surface 10b holds the anaerobic microorganisms thereon. A biofilm including the anaerobic microorganisms is placed and fixed onto the other surface 10b of the negative electrode 10 so that the anaerobic microorganisms are held by the negative electrode 10. A typical biofilm has a three-dimensional structure including a microbial population and an extracellular polymeric substance (EPS) that the microbial population produces. The anaerobic microorganisms are not necessarily held by the negative electrode 10 via the biofilm. The anaerobic microorganisms may be held not only on the surface of the negative electrode 10 but also inside the negative electrode 10.

The anaerobic microorganisms held by the negative electrode 10 are preferably electricity-producing bacteria having, for example, an extracellular electron transfer mechanism. Specific examples of anaerobic microorganisms include Geobacter, Shewanella, Aeromonas, Geothrix, and Saccharomyces.

According to the present embodiment, an arithmetical mean roughness Ra on the surface of the negative electrode 10 is set in a range of 4.0 µm to 10000 µm. Preferably, the arithmetical mean roughness Ra on the other surface 10b of the negative electrode 10 on which the anaerobic microorganisms are held is in the range of 4.0 µm to 10000 µm. The arithmetical mean roughness Ra of 4.0 µm or greater on the surface of the negative electrode 10 increases the area of the corresponding surface. Since the amount of the anaerobic microorganisms supported on the negative electrode 10 is increased as the area of the surface is increased, the reaction of producing hydrogen ions and electrons from at least one of the organic matter or the nitrogen-containing compound contained in the liquid 70 to be treated is induced efficiently, so as to improve the output power of the microbial fuel cell.

The arithmetical mean roughness Ra on the surface of the negative electrode 10 can be measured in accordance with Japanese Industrial Standards JIS B0601: 2013 (Geometrical Product Specifications (GPS)-Surface texture: Profile method-Terms, definitions and surface texture parameters). In particular, the surface of the negative electrode is observed with a laser microscope, for example, so as to measure the arithmetical mean roughness Ra in an area of 500 µm × 500 µm at three different points. An average of the arithmetical mean roughness Ra obtained at the three different points is calculated, so as to obtain the arithmetical mean roughness Ra on the surface of the negative electrode.

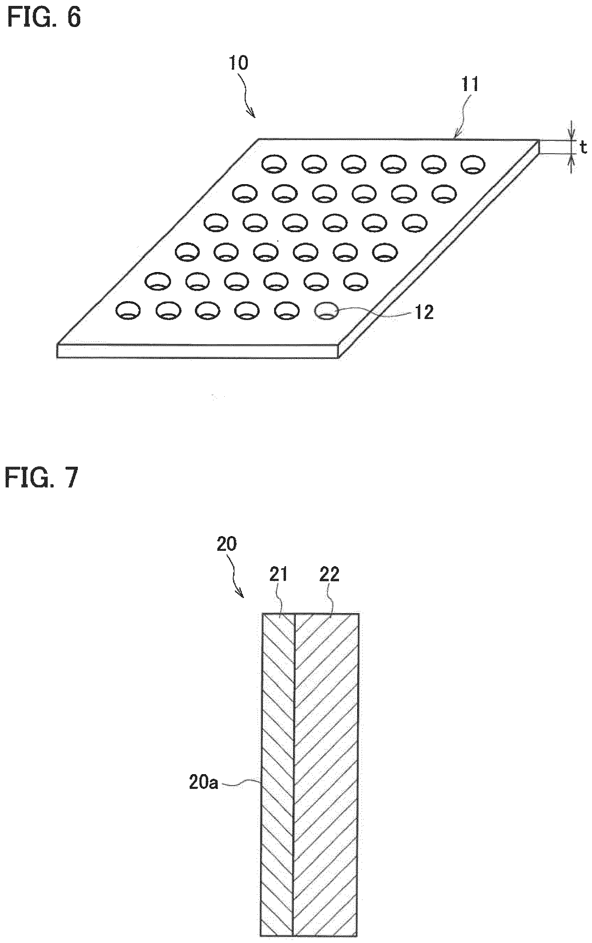

Since the amount of the anaerobic microorganisms supported can be increased as the area of the surface of the negative electrode is increased, the upper limit of the arithmetical mean roughness Ra on the surface of the negative electrode is preferably, but not necessarily, 10000 µm. The upper limit of the arithmetical mean roughness Ra may be determined as follows. When the graphene sheet is used for the first carbon material 11, the graphene sheet shown in Fig. 6 preferably has a thickness t up to about 20 mm. As described below, the graphene sheet preferably has penetration holes 12. The arithmetical mean roughness Ra is a value, represented by micrometers (µm), obtained such that a roughness profile is reflected about a center line, and the area defined by the roughness profile and the center line is divided by the length. Since the center line of the graphene sheet having the thickness t of 20 mm is drawn at a position of the thickness of 10 mm, the area defined by the center line and the roughness profile reflected about the center line is 10 mm (reflection thickness) × 0.5 mm (measurement length), for example. Since the arithmetical mean roughness Ra is obtained by dividing the area by the measurement length (0.5 mm), the upper limit of the arithmetical mean roughness Ra is 10 mm (10000 µm).

To ensure the mechanical strength of the negative electrode 10, the arithmetical mean roughness Ra on the surface of the negative electrode 10 is preferably set in a range of 4.0 µm to 5000 µm, more preferably in a range of 4.0 µm to 1000 µm.

As described above, according to the present embodiment, the arithmetical mean roughness Ra on the surface of the negative electrode 10 is set in the range of 4.0 µm to 10000 µm. The arithmetical mean roughness Ra may be increased by any method, and an example of the method is to support a second carbon material on the surface of the first carbon material 11. In particular, as shown in Fig. 5(b), the second carbon material 13 is preferably brought into contact with the surface 11a of the first carbon material 11, so as to increase the surface area of the first carbon material 11 to lead the arithmetical mean roughness Ra to 4.0 µm. The use of the second carbon material 13 facilitates the increase in the arithmetical mean roughness Ra on the surface of the negative electrode, and allows electrons produced by microorganisms 14 to easily be transferred to the first carbon material 11 via the second carbon material 13. The amount of the second carbon material 13 supported on the surface 11 a of the first carbon material 11 may be determined as appropriate so as to lead the arithmetical mean roughness Ra to result in 4.0 µm or greater. The second carbon material 13 may be supported either entirely or partly on the surface 11a of the first carbon material 11.

The second carbon material 13 is preferably, but not necessarily, in a particle state. In particular, the second carbon material 13 preferably has a spherical shape or a polyhedral shape. A mean particle diameter (a median diameter: d50) of the second carbon material 13 is preferably, but not necessarily, 1 mm or smaller, more preferably 1 µm or smaller. The lower limit of the mean particle diameter of the second carbon material 13 may be, but is not limited to, 50 nm. The particle diameter of the second carbon material 13 may be obtained such that the second carbon material 13 is observed with a scanning electron microscope (SEM) or a transmission electron microscope (TEM).

The second carbon material 13 in a particle state may be at least a material selected from the group consisting of carbon black, activated carbon, and fullerene. An example of carbon black may be at least a material selected from the group consisting of Ketjenblack (registered trademark), acetylene black, channel black, lamp black, oil furnace black, and thermal black.

The shape of the second carbon material 13 is not limited to a particle state, and may be a wire state or a flake state. The second carbon material 13 in a wire state may be at least a material selected from the group consisting of carbon nanotube, carbon nanofiber, carbon nanohom, and carbon fibril. The second carbon material 13 in a flake state may be graphene having a thickness of 0.05 µm to 1 µm and an aspect ratio of about 10 to 1000. The aspect ratio is a ratio of a mean in-plane diameter D to the thickness (mean in-plane diameter D/thickness) of graphene.

A method of supporting the second carbon material 13 on the surface 11a of the first carbon material 11 may be any method, and the second carbon material 13 may be supported as follows. First, the second carbon material 13 and a binder are mixed into a solvent to prepare carbon material slurry. The mixed amount of the second carbon material 13 and the binder is preferably adjusted as appropriate so as to provide fine gaps. The solvent used for preparing the carbon material slurry may be any solvent, and examples thereof include water, and an alcohol solvent such as methanol, ethanol, 1-propanol, 2-propanol, ethylene glycol, and propylene glycol. The slurry prepared with each solvent may be mixed with a known surfactant or thickener as appropriate.

The carbon material slurry is applied to the surface 11a of the first carbon material 11 and is then dried, so as to support the second carbon material 13 on the surface 11a of the first carbon material 11. A temperature upon drying of the carbon material slurry is preferably, but not necessarily, set in a range of 80°C to 120°C sufficient to remove the solvent from the slurry.

The binder used may be any compound that can bind the particles of the second carbon material 13 together. The binder preferably includes at least one of the compounds selected from the group consisting of polytetrafluoroethylene (PTFE), polyvinylidene fluoride (PVDF), and an ethylene-propylene-diene copolymer (EPDM).

Another example of the method of increasing the arithmetical mean roughness Ra on the surface of the negative electrode 10 is to roughen the surface of the negative electrode 10, instead of supporting the second carbon material thereon. A specific example is to exfoliate part of graphene present on the surface layer of the first carbon material 11 with adhesive tape. Alternatively, the surface of the first carbon material 11 may be roughened by filing, for example.

The graphene sheet used for the first carbon material 11 preferably has electrical resistivity of 20 µΩ·m or lower in the direction Y perpendicular to the thickness direction X of the graphene sheet. The electrical resistivity in the thickness direction of the graphene sheet is preferably at least 100 times as high as the electrical resistivity in the direction Y perpendicular to the thickness direction X. The electrical resistivity set to the range as described above can facilitate the flow of electrons produced by a local cell reaction in the negative electrode 10 toward the external circuit 90. The lower limit of the electrical resistivity of the graphene sheet in the direction Y perpendicular to the thickness direction X may be, but is not limited to, 0.10 µΩ·m or greater. The upper limit of the electrical resistivity of the graphene sheet in the thickness direction X may be, but is not limited to, at most 1000 times as high as the electrical resistivity in the direction Y perpendicular to the thickness direction X. The electrical resistivity may be measured by a four-point probe method, for example.

The negative electrode 10 and the positive electrode 20 according to the present embodiment preferably have flexibility. The negative electrode 10 and the positive electrode 20 having flexibility can be deformed to have a cylindrical shape, for example, as described below. The resistance to water pressure can be improved when the microbial fuel cell 1 having a cylindrical shape is increased in size. Accordingly, the inner space can be defined by the membrane electrode assemblies 40 and the cassette substrate 50 stably, so as to continuously supply oxygen to each positive electrode 20.

The first carbon material 11 preferably has a sheet-like shape, as shown in Fig. 5. The first carbon material 11 includes at least the graphene sheet, as described above. The first carbon material 11 may only include the graphene sheet, or may be provided with another sheet material stacked thereon. The other sheet material stacked on the graphene sheet is preferably a material having corrosion resistance and high electrical conductivity, and an example thereof may be at least a material selected from the group consisting of carbon paper, carbon cloth, and carbon felt.

Table 1 shows the electrical resistivity when the same amount of carbon black is supported on the respective surfaces of nonwoven fabric including polyethylene (PE) and polypropylene (PP) mixed together, carbon cloth, carbon felt, stainless steel mesh, and a graphene sheet. In particular, the electrical resistivity indicated is measured when the nonwoven fabric, carbon cloth, carbon felt, stainless steel mesh, and graphene sheet having a thickness with no stiffness are used, and the carbon black is supported on the surface of each material. The results in Table 1 show that the electrical resistivity of the nonwoven fabric is high, and the carbon cloth and the carbon felt have the electrical resistivity about six times as high as the graphene sheet or over, leading to an increase in electrical resistance when the electrode is increased in area. While the stainless steel mesh has substantially the same electrical resistivity as the graphene sheet, the stainless steel mesh has lower corrosion resistance than the graphene sheet, and may be decreased in power generation performance when used for a long period of time. The first carbon material 11 according to the present embodiment thus preferably includes only the graphene sheet in view of the electrical resistance and the corrosion resistance.

**[Table 1]**

| Electrode Material | Electrical resistivity (Ωcm) |
|---|---|
| Nonwoven fabric (PE/PP mixed) + carbon black | 18.4 |
| Carbon cloth+ carbon black | 3.28 × 10⁻³ |
| Carbon felt + carbon black | 3.08 × 10⁻³ |
| Stainless steel mesh + carbon black | 3.20 × 10⁻⁴ |
| Graphene sheet + carbon black | 5.26 × 10⁻⁴ |

There is a publication, "F. L. LaQue: Marine Corrosion Causes and Prevention, John Wiley and Sons, p.179 (1975)", describing corrosion potentials of various kinds of metals in stationary seawater at normal temperature. This document teaches that a potential of graphite with respect to a saturated calomel electrode is in the range of +0.3 to +0.2 (V vs. SCE), and a potential of platinum with respect to the saturated calomel electrode is in the range of +0.25 to +0.18 (V vs. SCE). Namely, graphite has higher corrosion resistance than platinum, and is therefore a superior material for use in the first carbon material 11.

As shown in Fig. 6, the negative electrode 10 may be provided with continuous spaces (voids), such as penetration holes 12, in the thickness direction X. The negative electrode 10 having such penetration holes 12 facilitates the transfer of hydrogen ions produced by the local cell reaction described below toward the ion transfer layer 30, so as to increase the rate of the oxygen reduction reaction.

The negative electrode 10 according to the present embodiment may be modified with an electron transfer mediator molecule. Alternatively, the liquid 70 to be treated in the waste liquid tank 80 may include the electron transfer mediator molecule. The presence of the molecule can promote the transfer of the electrons from the anaerobic microorganisms to the negative electrode 10, so as to treat the liquid more efficiently.

More particularly, the electrons flow between the negative electrode 10 and cells or a final electron acceptor due to a metabolism mechanism of the anaerobic microorganisms. The mediator molecule introduced into the liquid 70 to be treated serves as a final electron acceptor and transfers the received electrons to the negative electrode 10. Accordingly, the oxidative decomposition rate of the organic matter and the like in the liquid 70 can be enhanced. An example of such an electron transfer mediator molecule may be, but is not limited to, at least a material selected from the group consisting of neutral red, anthraquinone-2,6-disulfonate (AQDS), thionine, potassium ferricyanide, and methyl viologen.

### (Positive electrode)

The positive electrode 20 according to the present embodiment has a function that causes oxygen supplied from the gas phase 2 to react with hydrogen ions and electrons produced in the negative electrode 10 so as to produce water. The positive electrode 20 according to the present embodiment may have any structure that can achieve the effect described above, but preferably includes at least the water-repellent layer 21 and a gas diffusion layer 22, as shown in Fig. 7.

The water-repellent layer 21 has both water repellency and gas permeability. The water-repellent layer 21 has a function that allows gas to move from the gas phase 2 to the liquid 70 to be treated in the electrochemical system in the microbial fuel cell 1, while separating the gas phase 2 from the liquid 70 to be treated in a favorable state. In particular, the water-repellent layer 21 allows oxygen in the gas phase 2 to pass therethrough to reach the gas diffusion layer 22. The water-repellent layer 21 is preferably a porous layer. The porous water-repellent layer 21 can have high gas permeability.

The gas diffusion layer 22 preferably includes, for example, a porous electrical conductive material and a catalyst supported on the electrical conductive material. Alternatively, the gas diffusion layer 22 may include a porous catalyst having electrical conductivity.

In the present embodiment, the water-repellent layer 21 of the positive electrode 20 is arranged on the gas phase 2 side. The surface 20a of the water-repellent layer 21 on the opposite side of the gas diffusion layer 22 is exposed to the gas phase 2. The oxygen in the gas phase can be supplied to the gas diffusion layer 22 through the water-repellent layer 21. The gas diffusion layer 22 of the positive electrode 20 is in contact with the ion transfer layer 30 so as to be opposed to the negative electrode 10 via the ion transfer layer 30.

More particularly, the water-repellent layer 21 is preferably a porous body having water repellency. Such a water-repellent layer 21 can have high gas permeability. The water-repellent layer 21 is preferably formed of, for example, at least one of the materials selected from the group consisting of polytetrafluoroethylene (PTFE), polydimethylsiloxane (PDMS), polyethylene (PE), and polypropylene (PP).

The gas diffusion layer 22 preferably includes, for example, a porous electrical conductive material and a catalyst supported on the electrical conductive material. Alternatively, the gas diffusion layer 22 may include a porous catalyst having electrical conductivity. The electrical conductive material in the gas diffusion layer 22 may include at least one of the materials selected from the group consisting of a carbon substance, an electrical conductive polymer, a semiconductor, and metal. The carbon substance is a substance including carbon as a component. Examples of carbon substances include graphite, activated carbon, carbon powder such as carbon black, VULCAN (registered trademark) XC-72R, acetylene black, furnace black, and Denka black, carbon fiber such as graphite felt, carbon wool, and carbon woven material, a carbon plate, carbon paper, and a carbon disc. Other examples may include microstructure substances such as carbon nanotube, carbon nanohorn, and carbon nanoclusters.

The electrical conductive polymer is a general term for high molecular compounds having electrical conductivity. Examples of electrical conductive polymers include polymers each composed of a single monomer or two or more monomers, each of which is aniline, aminophenol, diaminophenol, pyrrole, thiophene, paraphenylene, fluorene, furan, acetylene, or a derivative of each compound. More specific examples of electrical conductive polymers include polyaniline, polyaminophenol, polydiaminophenol, polypyrrole, polythiophene, polyparaphenylene, polyfluorene, polyfuran, and polyacetylene. The electrical conductive material made of metal may be stainless steel mesh. The electrical conductive material is preferably a carbon substance in view of availability, costs, corrosion resistance, and durability.

The electrical conductive material is preferably in the form of powder or fiber. The electrical conductive material may be supported by a supporting body. The supporting body is a member that has stiffness and allows the gas diffusion electrode to have a fixed shape. The supporting body may be either a non-conductive body or an electrical conductive body. When the supporting body is a non-conductive body, examples thereof include glass, plastics, synthetic rubber, ceramics, waterproofing or water-repellent paper, a plant piece such as a wood piece, and an animal piece such as a bone piece or a shell. Examples of supporting bodies having a porous structure include porous ceramics, porous plastics, and a sponge. When the supporting body is an electrical conductive body, examples thereof include a carbon substance such as carbon paper, carbon fiber, and a carbon stick, metal, and an electrical conductive polymer. When the supporting body is an electrical conductive body, the supporting body may function as a current collector obtained such that an electrical conductive material supporting a carbon-based material described below is provided on the surface of the supporting body.

The catalyst in the gas diffusion layer 22 is preferably, for example, a carbon-based material doped with metal atoms. The metal atoms are preferably, but not necessarily, atoms of at least one metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum, and gold. The carbon-based material doped with such metal atoms exhibits high performance as a catalyst particularly for enhancing an oxygen reduction reaction and an oxygen evolution reaction. The amount of the metal atoms included in the carbon-based material may be determined as appropriate so that the carbon-based material exhibits high catalytic performance.

The carbon-based material is preferably further doped with atoms of at least one nonmetal selected from the group consisting of nitrogen, boron, sulfur, and phosphorus. The amount of the doped nonmetal atoms may also be determined as appropriate so that the carbon-based material exhibits high catalytic performance.

The carbon-based material is obtained in a manner such that a carbon-based raw material such as graphite or amorphous carbon is used as a base, and the carbon-based raw material is doped with metal atoms and atoms of at least one nonmetal selected from the group consisting of nitrogen, boron, sulfur, and phosphorus.

Combinations of the doped metal atoms and nonmetal atoms used for the carbon-based material are selected as appropriate. Particularly, the nonmetal atoms preferably include nitrogen, and the metal atoms preferably include iron. The carbon-based material including these atoms can achieve significantly high catalytic activity. The nonmetal atoms may only include nitrogen. The metal atoms may only include iron.

The nonmetal atoms may include nitrogen, and the metal atoms may include at least one of cobalt and manganese. The carbon-based material including such atoms can also achieve significantly high catalytic activity. The nonmetal atoms may only include nitrogen. The metal atoms may only include either cobalt or manganese, or may only include cobalt and manganese.

The carbon-based material may have any shape. For example, the carbon-based material may be in a particle state or have a sheet-like shape. The carbon-based material having a sheet-like shape may have any size, and may be a minute material. The carbon-based material having a sheet-like shape may be a porous material. The porous carbon-based material having a sheet-like shape is preferably, for example, in the form of woven or non-woven fabric. Such a carbon-based material can be used for the gas diffusion layer 22 without the electrical conductive material included.

The carbon-based material serving as a catalyst in the gas diffusion layer 22 may be produced as follows. First, a mixture of a nonmetal compound including at least one nonmetal selected from the group consisting of nitrogen, boron, sulfur, and phosphorus, a metal compound, and a carbon-based raw material is prepared. Thereafter, the mixture is heated at a temperature from 800 °C or higher to 1000 °C or lower, for from 45 seconds or longer to shorter than 600 seconds. This yields the carbon-based material serving as a catalyst.

As described above, graphite or amorphous carbon may be used for the carbon-based raw material. The metal compound may be any compound that includes metal atoms capable of being coordinated with nonmetal atoms with which the carbon-based raw material is doped. The metal compound may be at least a material selected from the group consisting of: an inorganic metal salt such as a metal chloride, nitrate, sulfate, bromide, iodide, and fluoride; an organic metal salt such as acetate; a hydrate of an inorganic metal salt; and a hydrate of an organic metal salt. When graphite is doped with iron, for example, the metal compound preferably includes iron(III) chloride. When graphite is doped with cobalt, the metal compound preferably includes cobalt chloride. When the carbon-based raw material is doped with manganese, the metal compound preferably includes manganese acetate. The amount of the metal compound used is preferably determined, for example, such that the metal atoms are present in the metal compound in an amount of from 5% to 30% by mass, more preferably from 5% to 20% by mass, with respect to the carbon-based raw material.

The nonmetal compound preferably includes at least one nonmetal selected from the group consisting of nitrogen, boron, sulfur, and phosphorus, as described above. The nonmetal compound may be at least a material selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. The amount of the nonmetal compound used is determined as appropriate depending on the amount of the doped nonmetal atoms applied to the carbon-based raw material. The amount of the nonmetal compound used is preferably determined such that a molar ratio of the metal atoms in the metal compound and the nonmetal atoms in the nonmetal compound is in the range from 1:1 to 1:2, more preferably in the range from 1:1.5 to 1:1.8.

When the carbon-based material serving as a catalyst is prepared, the mixture of the nonmetal compound, the metal compound, and the carbon-based raw material is obtained as follows. First, the carbon-based raw material, the metal compound, and the nonmetal compound are mixed, and a solvent such as ethanol is added thereto as necessary, so as to adjust the total mixture amount. These materials are dispersed by an ultrasonic dispersion method. The dispersed product is heated at an appropriate temperature (for example, 60 °C), and then dried so as to remove the solvent. This yields the mixture including the nonmetal compound, the metal compound, and the carbon-based raw material.

Subsequently, the mixture thus obtained is heated in a reduction atmosphere or an inert gas atmosphere. As a result, the carbon-based raw material is doped with the nonmetal atoms, and is further doped with the metal atoms when the nonmetal atoms and the metal atoms are coordinated with each other. The heating temperature is preferably in the range from 800 °C or higher to 1000 °C or lower, and the heating time is preferably in the range from 45 seconds or longer to shorter than 600 seconds. Since the heating time is short, the carbon-based material is produced efficiently, and the catalytic activity of the carbon-based material is further enhanced. The heating rate of the mixture at the beginning of heating in the heating process is preferably 50 °C/second or greater. This rapid heating further increases the catalytic activity of the carbon-based material.

The carbon-based material may further be subjected to acid cleaning. For example, the carbon-based material may be dispersed in pure water with a homogenizer for 30 minutes, added in 2M sulfuric acid, and then stirred at 80 °C for three hours. This process minimizes elution of the metal components from the carbon-based material.

The production method described above allows the carbon-based material to have high electrical conductivity in which the amounts of an inert metal compound and metal crystals are significantly reduced.

### (Ion transfer layer)

The microbial fuel cell 1 according to the present embodiment includes the ion transfer layer 30 permeable to hydrogen ions. As shown in Fig. 1 to Fig. 4, the negative electrode 10 is separated from the positive electrode 20 with the ion transfer layer 30 interposed therebetween. The ion transfer layer 30 has a function that allows the hydrogen ions produced in the negative electrode 10 to pass therethrough so as to move toward the positive electrode 20.

The ion transfer layer 30 may be an ion exchange membrane including ion exchange resin. As the ion exchange resin, for example, NAFION (registered trademark) made by DuPont Kabushiki Kaisha, and Flemion (registered trademark) and Selemion (registered trademark) made by Asahi Glass Co., Ltd. can be used.

The ion transfer layer 30 may also be a porous membrane having pores through which the hydrogen ions can be transmitted. In other words, the ion transfer layer 30 may be a sheet having spaces (voids) through which the hydrogen ions move between the negative electrode 10 and the positive electrode 20. The ion transfer layer 30 preferably includes at least one of the materials selected from the group consisting of a porous sheet, a sheet of woven fabric, and a sheet of nonwoven fabric. Alternatively, the ion transfer layer 30 may be at least a material selected from the group consisting of a glass fiber membrane, a synthetic fiber membrane, and plastic nonwoven fabric, or may be a stacked body including a plurality of these membranes stacked on one another. The porous sheet having a plurality of pores as described above allows the hydrogen ions to easily pass therethrough. The pores in the ion transfer layer 30 may have any diameter that can transmit the hydrogen ions from the negative electrode 10 to the positive electrode 20 therethrough.

As described above, the ion transfer layer 30 has a function that allows the hydrogen ions produced in the negative electrode 10 to pass therethrough so as to move toward the positive electrode 20. When the negative electrode 10 and the positive electrode 20 are not in contact with but arranged close to each other, for example, the hydrogen ions can move from the negative electrode 10 to the positive electrode 20. Therefore, the microbial fuel cell 1 according to the present embodiment does not necessarily include the ion transfer layer 30. However, since the use of the ion transfer layer 30 promotes the efficient transfer of the hydrogen ions from the negative electrode 10 to the positive electrode 20, the ion transfer layer 30 is preferably provided in view of the improvement of the output power.

The waste liquid tank 80 holds the liquid 70 to be treated inside thereof, but may have a configuration in which the liquid 70 flows through the waste liquid tank 80. For example, as shown in Fig. 1 to Fig. 3, the waste liquid tank 80 may include a liquid supply port 81 from which the liquid 70 is supplied into the waste liquid tank 80, and a liquid drain port 82 from which the treated liquid 70 is drained to the outside of the waste liquid tank 80.

The waste liquid tank 80 is preferably kept in an anaerobic condition in which molecular oxygen is not present or the concentration of molecular oxygen present is quite low. Accordingly, the liquid 70 to be treated can be held in the waste liquid tank 80 so as to hardly come into contact with oxygen.

The effects of the microbial fuel cell 1 according to the present embodiment are described below. When the microbial fuel cell 1 is in operation, the liquid 70 to be treated containing at least one of organic matter and a nitrogen-containing compound is supplied to the negative electrode 10, and gas containing air or oxygen is supplied to the positive electrode 20. The air is continuously supplied to the positive electrode 20 from the opening on the upper side of the cassette substrate 50. The liquid 70 is also preferably continuously supplied to the negative electrode 10 through the liquid supply port 81 and the liquid drain port 82.

In the positive electrode 20, the air passes through the water-repellent layer 21 and is then diffused by the gas diffusion layer 22. In the negative electrode 10, the hydrogen ions and electrons are generated, by the catalysis of the microorganisms, from at least one of the organic matter and the nitrogen-containing compound contained in the liquid 70 to be treated. The generated hydrogen ions are transferred through the ion transfer layer 30 toward the positive electrode 20. The generated electrons are transferred through the electrically conductive sheet of the negative electrode 10 to the external circuit 90, and are further transferred to the gas diffusion layer 22 of the positive electrode 20 from the external circuit 90. The hydrogen ions and electrons transferred to the gas diffusion layer 22 are bonded to the oxygen due to the effect of the catalyst, so as to turn into water to be consumed. At this time, the external circuit 90 recovers electrical energy flowing in such a closed circuit.

As described above, the microbial fuel cell 1 according to the present embodiment includes: the negative electrode 10 including the sheet-like first carbon material 11 including the graphene sheet, the negative electrode 10 supporting microorganisms; and the positive electrode 20 opposed to the negative electrode 10. The negative electrode 10 has an arithmetical mean roughness Ra on the surface of the negative electrode 10 set in a range of 4.0 µm to 10000 µm. Since the graphene sheet of the first carbon material 11 has flexibility, the negative electrode 10 can be deformed into a particular shape so as to have high resistance to water pressure, for example. In addition, since the graphene sheet itself has appropriate strength, a supporting body for supporting the graphene sheet does not need to be used.

The microbial fuel cell 1 according to the present embodiment can increase in the amount of anaerobic microorganisms supported on the negative electrode 10, since the arithmetical mean roughness Ra on the surface of the negative electrode 10 is high. Accordingly, the reaction of producing the hydrogen ions and electrons from at least one of the organic matter and the nitrogen-containing compound contained in the liquid 70 to be treated, is induced efficiently, so as to improve the output power of the microbial fuel cell 1.

When an electrode base having high electrical resistivity is used, as disclosed in Patent Literature 1, the resistivity of the electrode base greatly influences the recovering of electricity in association with an increase in size of the cell. In contrast, the negative electrode according to the present embodiment does not have stiffness, and includes the first carbon material 11 having much smaller resistivity in the plane direction YZ, so as to have the great advantage when formed into a cylindrical shape and increased in area, as described below.

The fuel cell unit 60 shown in Fig. 1 to Fig. 4 has a structure assembled from the two membrane electrode assemblies 40 and the cassette substrate 50; however, the present embodiment is not limited to this structure. For example, the membrane electrode assembly 40 may be joined to only one side surface of the cassette substrate 50, and the other side surface may be sealed by a plate member. While Fig. 4 illustrates the cassette substrate 50 with the upper side entirely open, the upper side of the cassette substrate 50 may partly be open or may be closed when air (oxygen) can be introduced to the inside of the cassette substrate 50.

The fuel cell unit 60 shown in Fig. 1 to Fig. 4 has a structure assembled from the two membrane electrode assemblies 40 and the cassette substrate 50, as described above. The entire outline of the fuel cell unit is substantially a rectangular parallelepiped. The microbial fuel cell according to the present embodiment is not limited to the fuel cell unit having the outline of substantially a rectangular parallelepiped.

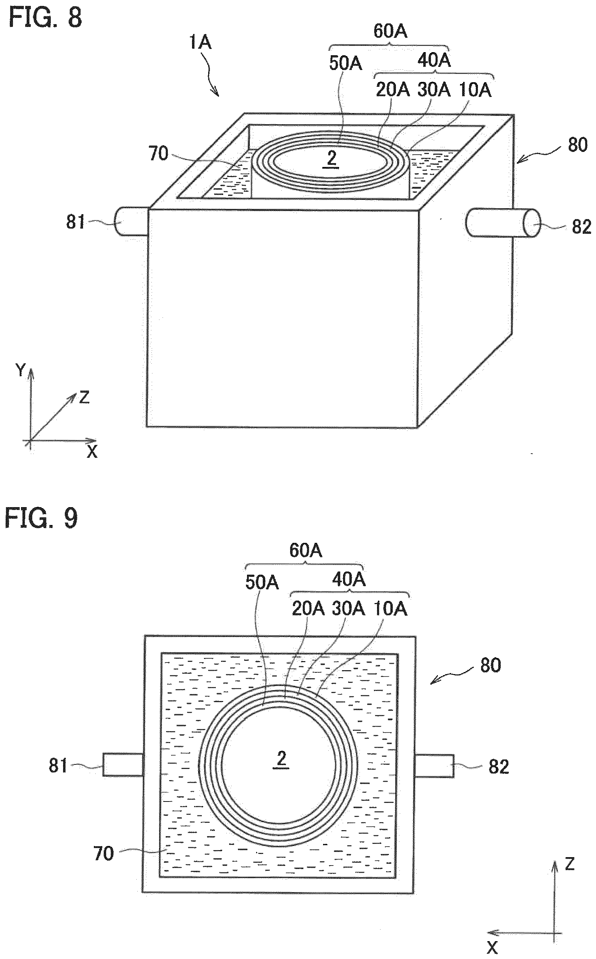

When the microbial fuel cell according to the present embodiment is increased in size, the negative electrode, the positive electrode and the ion transfer layer need to increase in resistance to water pressure, since the water pressure acting on the negative electrode, the positive electrode and the ion transfer layer increases as the depth of the waste liquid tank 80 increases. In view of this, as shown in Fig. 8 and Fig. 9, the fuel cell unit 60A of the microbial fuel cell 1A according to the present embodiment also preferably has a cylindrical shape. In particular, the negative electrode 10A, the ion transfer layer 30A, and the positive electrode 20A may be placed in this order around the entire side surface of the cassette substrate 50A having a cylindrical shape. The fuel cell unit 60A having a cylindrical shape can enhance the resistance to water pressure, since the water pressure substantially evenly acts on the circumference of the membrane electrode assembly 40A including the negative electrode 10A, the ion transfer layer 30A, and the positive electrode 20. As described above, the negative electrode 10A according to the present embodiment can easily be formed into a cylindrical shape since the graphene sheet included has flexibility.

The cassette substrate 50A shown in Fig. 8 and Fig. 9 has a cylindrical shape. The inside of the cassette substrate 50A is hollow so as to provide the gas phase 2 communicating with the air, as in the case of the fuel cell unit 60 shown in Fig. 1 to Fig. 4. The oxygen is preferably continuously supplied to the positive electrode 20 from the gas phase 2, as in the case of the fuel cell unit 60. The side surface of the cassette substrate 50A opposed to the positive electrode 20 preferably has oxygen permeability, and the bottom surface of the cassette substrate 50A is preferably sealed so as not allow the liquid 70 to be treated to enter. The side surface of the cassette substrate 50A may be composed of a mesh-like structure having a plurality of pores, or may be formed of a material having oxygen permeability.

When an electrode base having high electrical resistivity is used, as disclosed in Patent Literature 1, the resistivity of the electrode base greatly influences the recovering of electricity in association with an increase in size of the cell. In contrast, the negative electrode according to the present embodiment does not have stiffness, and includes the first carbon material 11 having much smaller resistivity in the plane direction YZ, so as to have the great advantage when formed into a cylindrical shape and increased in area.

### [Waste liquid treatment system]

A waste liquid treatment system according to the present embodiment is described below. The waste liquid treatment system according to the present embodiment includes the microbial fuel cell described above, and the positive electrode 20 is arranged so as to be in contact with gas containing oxygen.

As described above, the microbial fuel cell 1 according to the present embodiment supplies the liquid 70 to be treated containing at least one of the organic matter and the nitrogen-containing compound to the negative electrode 10. The microbial fuel cell 1 generates carbon dioxide or nitrogen together with the hydrogen ions and electrons from at least one of the organic matter and the nitrogen-containing compound contained in the liquid 70 by the metabolism of the microorganisms supported on the negative electrode 10.

In particular, for example, when the liquid 70 to be treated includes glucose as organic matter, carbon dioxide, the hydrogen ions, and the electrons are generated by the local cell reaction shown below.
- Negative electrode 10 (anode): C₆H₁₂O₆ + 6H₂O → 6CO₂ + 24H⁺ + 24e⁻
- Positive electrode 20 (cathode): 6O₂ + 24H⁺ + 24e⁻ → 12H₂O

When the liquid 70 to be treated includes ammonia as a nitrogen-containing compound, nitrogen, the hydrogen ions, and the electrons are generated by the local cell reaction shown below.
- Negative electrode 10 (anode): 4NH₃ → 2N₂ + 12H⁺ + 12e⁻
- Positive electrode 20 (cathode): 3O₂ + 12H⁺ + 12e⁻ → 6H₂O

The waste liquid treatment system according to the present embodiment using the microbial fuel cell 1 causes the organic matter and the nitrogen-containing compound contained in the liquid 70 to be treated to come into contact with the negative electrode 10 to lead to oxidative decomposition, so as to purify the liquid 70. As described above, the waste liquid tank 80 may be provided with the liquid supply port 81 for supplying the liquid 70 to the waste liquid tank 80 and the liquid drain port 82 for draining the treated liquid 70 from the waste liquid tank 80, so as to continuously supply the liquid 70 to the waste liquid tank 80. Accordingly, the liquid 70 is continuously brought into contact with the negative electrode 10 so as to be treated efficiently.

### EXAMPLES

Hereinafter, the present embodiment will be described in more detail with reference to Example and Comparative Example, but is not intended to be limited to these examples.

### [Example]

### (Preparation of positive electrode)

First, a polytetrafluoroethylene (PTFE) dispersion liquid was applied to one surface of a carbon paper (electrode base material for fuel cell TGP-H-120, available from Toray Industries, Inc.), and was heated at 380 °C for 20 minutes. The PTFE dispersion liquid used was 60 wt% dispersion in H₂O (available from Sigma-Aldrich).

Subsequently, catalyst ink was applied to the other surface of the carbon paper. The catalyst ink was prepared such that a Pt/C catalyst, Nafion, and ion exchange water were mixed. After the catalyst ink was applied to the carbon paper to result in 2 mg/cm² of the platinum catalyst, the carbon paper was dried at 380 °C for 20 minutes, so as to prepare a positive electrode of this example. The Pt/C catalyst included in the catalyst ink was a catalyst available from Tanaka Kikinzoku Kogyo K. K., and the amount of platinum supported was 66.6%. Nafion used was a 5 wt% solution in lower aliphatic alcohols/H₂O mix.

### (Preparation of negative electrode)

First, a graphene sheet (flexible graphite material CARBOFIT (registered trademark) HGP-105, available from Hitachi Chemical Company, Ltd.) was cut out so as to have the same size as the catalyst-applied area in the positive electrode.

Subsequently, carbon black ink was applied to the surface of the graphene sheet and then dried at 380 °C for 20 minutes. The carbon black ink was prepared such that carbon black, a PTFE dispersion liquid, and ion exchange water were mixed. The carbon black used was Ketjenblack EC600JD (available from Lion Specialty Chemicals Co., Ltd.). The PTFE dispersion liquid used was 60 wt% dispersion in H₂O (available from Sigma-Aldrich).

Thereafter, an electrically conductive wire was attached to an end portion of the graphene sheet supporting the carbon black with an epoxy conductive adhesive (CW2400, CircuitWorks conductive adhesive epoxy), so as to prepare a negative electrode of this example.

### (Preparation of fuel cell unit)

First, anaerobic microorganisms were held on the surface of the negative electrode supporting the carbon black prepared as described above. Subsequently, polyolefin nonwoven fabric was used as an ion transfer layer, and the positive electrode, the ion transfer layer, and the negative electrode were stacked in this order so as to prepare a membrane electrode assembly. Thereafter, two membrane electrode assemblies and a cassette substrate having a substantially U-shape in cross section were stacked together, so as to obtain a fuel cell unit as shown in Fig. 4.

### [Comparative Example]

### (Preparation of negative electrode)

First, a graphene sheet (flexible graphite material CARBOFIT (registered trademark) HGP-105, available from Hitachi Chemical Company, Ltd.) was cut out so as to have the same size as the negative electrode of Example. Thereafter, an electrically conductive wire was attached to an end portion of the graphene sheet with an epoxy conductive adhesive (CW2400, CircuitWorks conductive adhesive epoxy), so as to prepare a negative electrode of this example.

### (Preparation of fuel cell unit)

First, anaerobic microorganisms were held on one surface of the negative electrode prepared as described above. Subsequently, polyolefin nonwoven fabric was used as an ion transfer layer, and the positive electrode used in Example, the ion transfer layer, and the negative electrode were stacked in this order so as to prepare a membrane electrode assembly. Thereafter, two membrane electrode assemblies and a cassette substrate having a substantially U-shape in cross section were stacked together, so as to obtain a fuel cell unit as shown in Fig. 4.

### [Evaluation]

### (Measurement of arithmetical mean roughness on surface of negative electrode)

The surface of the negative electrode obtained in each of Example and Comparative Example was observed with a laser microscope, so as to measure the arithmetical mean roughness Ra in accordance with JIS B0601: 2013. Table 2 shows the measurement results. As shown in Table 2, the negative electrode of Example to which the carbon black was applied has the arithmetical mean roughness on the surface supporting the anaerobic microorganisms that exceeds 4.0 µm. The arithmetical mean roughness of the negative electrode of Comparative Example without carbon black applied is less than 1.5 µm.

**[Table 2]**

| Graphite sheet | Arithmetic mean roughness Ra (µm) |
|---|---|
| Example (Carbon black coating) | 4.3 |
| Comparative Example (No coating) | 1.24 |

### (Measurement of output power)

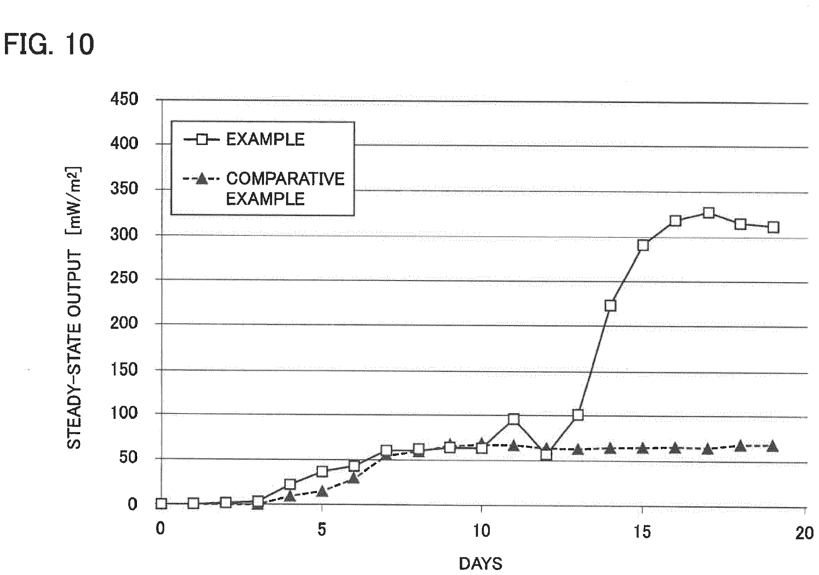

The fuel cell unit obtained in each of Example and Comparative Example was placed in a water tank with a volume of 300 cc, and a liquid to be treated was introduced into the water tank. The microbial fuel cell was operated therein for 20 days, and a change in output characteristics of each fuel cell was observed. The liquid to be treated was simulated sewage containing about 700 mg/L of total organic carbon and kept at 30 °C. The amount of the liquid to be treated introduced to the waste liquid tank was adjusted so that a hydraulic retention time of the liquid was 24 hours. The respective evaluation results are shown in Fig. 10.

As shown in Fig. 10, the microbial fuel cell of Example having 4.0 µm or greater of the arithmetical mean roughness Ra on the surface of the negative electrode, did not decrease in a steady-state output throughout the operating days but rather started improving in the output on the 13th day. This is presumed to be because the anaerobic microorganisms supported on the surface of the negative electrode was increased due to the high arithmetical mean roughness Ra on the surface, resulting in the improvement of the steady-state output.

The steady-state output of the microbial fuel cell of Comparative Example having less than 4.0 µm of the arithmetical mean roughness Ra on the surface of the negative electrode, was much worse than that of Example, although the steady-state output was not decreased over the course of the operating days. This is presumed to be because the amount of the anaerobic microorganisms supported on the surface of the negative electrode was smaller because of the smaller arithmetical mean roughness Ra on the surface.

The entire content of Japanese Patent Application No. P2015-162728 (filed on August 20, 2015) is incorporated herein by reference.

While the present embodiment has been described above, the present embodiment is not intended to be limited to the descriptions thereof, and various modifications will be made within the scope of the present embodiment.

### INDUSTRIAL APPLICABILITY

The microbial fuel cell according to the present embodiment can be deformed into a highly water-resistant shape, for example. The microbial fuel cell can increase in the amount of microorganisms supported on the negative electrode due to the high arithmetical mean roughness Ra. Accordingly, the reaction of producing hydrogen ions and electrons from organic matter contained in a liquid to be treated can be induced efficiently, so as to enhance the output power of the microbial fuel cell. Further, since the amount of microorganisms supported is increased, the performance of treatment of the waste liquid treatment system can be improved.

### REFERENCE SIGNS LIST

- 1, 1A: MICROBIAL FUEL CELL
- 10, 10A: NEGATIVE ELECTRODE
- 11: FIRST CARBON MATERIAL
- 13: SECOND CARBON MATERIAL
- 14: MICROORGANISMS
- 20, 20A: POSITIVE ELECTRODE
- 30, 30A: ION TRANSFER LAYER
- 70: LIQUID TO BE TREATED

## Claims

1. A microbial fuel cell comprising:
a negative electrode including a sheet-like first carbon material including a graphene sheet, the negative electrode supporting microorganisms; and
a positive electrode opposed to the negative electrode,
wherein the negative electrode has an arithmetical mean roughness Ra on a surface of the negative electrode set in a range of 4.0 µm to 10000 µm.

2. The microbial fuel cell according to claim 1, wherein the graphene sheet has electrical resistivity of 20 µΩ·m or less in a direction perpendicular to a thickness direction of the graphene sheet, and has electrical resistivity in the thickness direction which is at least 100 times as high as the electrical resistivity in the perpendicular direction.

3. The microbial fuel cell according to claim 1 or 2, wherein the negative electrode and the positive electrode have flexibility.

4. The microbial fuel cell according to any one of claims 1 to 3, wherein a second carbon material is supported on a surface of the first carbon material.

5. The microbial fuel cell according to claim 4, wherein the second carbon material is in a particle state, and a mean particle diameter of the second carbon material is 1 mm or smaller.

6. The microbial fuel cell according to claim 5, wherein the mean particle diameter of the second carbon material is 1 µm or smaller.

7. The microbial fuel cell according to claim 4, wherein the second carbon material is in a wire state or a flake state.

8. The microbial fuel cell according to any one of claims 1 to 7, further comprising an ion transfer layer permeable to hydrogen ions,
wherein the negative electrode is separated from the positive electrode with the ion transfer layer interposed therebetween.

9. A waste liquid treatment system comprising: the microbial fuel cell according to any one of claims 1 to 8,
wherein the positive electrode is arranged in contact with gas containing oxygen.
